(19) Europäisches Patentamt
European Patent Office
Office européen des brevets

(11) **EP 1 964 739 B1**

(12) **EUROPEAN PATENT SPECIFICATION**

(45) Date of publication and mention
of the grant of the patent:
**17.04.2013  Bulletin 2013/16**

(51) Int Cl.:
***B60T 8/32*** (2006.01)   ***B60T 13/74*** (2006.01)

(21) Application number: **08003551.2**

(22) Date of filing: **27.02.2008**

(54) **Brake apparatus**

Bremsvorrichtung

Appareil de freinage

(84) Designated Contracting States:
**DE**

(30) Priority:  **28.02.2007   JP 2007049919**

(43) Date of publication of application:
**03.09.2008   Bulletin 2008/36**

(73) Proprietor: **Hitachi, Ltd.**
**Chiyoda-ku**
**Tokyo 100-8280 (JP)**

(72) Inventors:
• **Yamada, Yukihiko**
**c/o Automotive Systems, Hitachi, Ltd.**
**Kawasaki-shi**
**Kanagawa 210-0011 (JP)**
• **Yamaguchi, Tohma**
**c/o Automotive Systems, Hitachi, Ltd.**
**Kawasaki-shi**
**Kanagawa 210-0011 (JP)**
• **Obata, Takuya**
**c/o Automotive Systems, Hitachi, Ltd.**
**Kawasaki-shi**
**Kanagawa 210-0011 (JP)**
• **Oikawa, Hirotaka**
**c/o Automotive Systems, Hitachi, Ltd.**
**Kawasaki-shi**
**Kanagawa 210-0011 (JP)**

(74) Representative: **HOFFMANN EITLE**
**Patent- und Rechtsanwälte**
**Arabellastrasse 4**
**81925 München (DE)**

(56) References cited:
EP-A2- 0 379 329       WO-A1-97/16334
WO-A1-2004/110840   DE-A1-102006 030 168
JP-A- 10 138 909       JP-A- 2007 296 963

**Description**

The present invention relates to a brake apparatus for use in braking a vehicle, and more particularly, the present invention relates to a brake apparatus provided with an electric booster which is operated by use of an electric actuator as a boosting source.

Examples of an electric booster which is operated by use of an electric actuator as a boosting source include an electric booster disclosed in Japanese Patent Application Publication H10-138909. This electric booster comprises a primary piston (input member) which moves forward or backward in response to an operation of a brake pedal, and a booster piston (assist member) which moves forward or backward by being driven by an electric machinery (electric actuator). This electric booster generates a brake hydraulic pressure in a master cylinder under an input thrust transmitted through the brake pedal to the primary piston and a booster thrust (assist thrust) transmitted by the electric machinery to the booster piston, and the electric booster transmits a part of a reactive force generated by the brake hydraulic pressure to the input member and another part of the reactive force to the assist member.

In a case that such an electric booster is used in combination with an anti-lock brake system, a problem arises in that a hydraulic pressure in a master cylinder undergoes a change during operation of the anti-lock brake system, and the change in the hydraulic pressure is transmitted to an input member (primary piston) where it becomes a reactive force acting against a brake pedal, thereby causing a change in a pedal pressure required to depress the brake pedal. In the above-mentioned electric booster disclosed in Japanese Patent Application Publication H10-138909, when the brake pedal is depressed, a pedal pressure sensor detects the pedal pressure, and the electric machine is controlled such that an appropriate assist thrust can be provided according to the detected pedal pressure. Therefore, if a pedal pressure is changed due to operation of an anti-lock brake system as mentioned above, the electric machine operates to provide an assist thrust in accordance with the changed pedal pressure, whereby a further change may occur in the master cylinder. As a result, during operation of the anti-lock brake system, a pedal pressure is subject to increasing variation, which causes a pronounced deterioration in pedal feeling.

EP 0 379 329 A2 relates to a pneumatic support booster, in which the assist member is passively displaced in response to the variation of the pressure occurring in a master cylinder.

WO 97/16334 A1 relates to a pneumatic booster, in which the instantaneous pressure or deceleration actual value is stored upon commencing the anti-lock control and the brake force booster actuates the brake so that the pressure or deceleration actual value is maintained constant.

The present invention has been contrived in consideration of the above-mentioned problem in the conventional art, and an object of the invention is to provide a brake apparatus in which a hydraulic pressure in a master cylinder is prevented from being increasingly varied while an anti-lock brake system is in operation, whereby a pedal feeling can be improved.

The present invention provides a brake apparatus as defined in independent claim 1. Advantageous further embodiments are recited in the dependent claims.

Fig. 1 is a schematic diagram illustrating a structure of a brake apparatus of an embodiment of the present invention;
Fig. 2 is a cross-sectional diagram illustrating an entire structure of an electric booster in the brake apparatus;
Fig. 3 is a cross-sectional diagram illustrating structures of main parts of the electric booster in the brake apparatus;
Fig. 4 is a pattern diagram illustrating a basic concept of the electric booster;
Fig. 5 is a flow chart illustrating a flow for controlling the electric booster when an anti-lock brake system is in operation according to an embodiment not supporting claim 1;
Fig. 6 is a time chart illustrating an operation of the electric booster when the anti-lock brake system is in operation according to an embodiment not supporting claim 1;
Fig. 7 is a graph illustrating a relationship between positions of an input member, and target positions of an assist member each of which has a value obtained by damping a position of the input member;
Fig. 8 is a flow chart illustrating another flow for controlling the electric booster when the anti-lock brake system is in operation;
Fig. 9 is a cross-sectional diagram illustrating an electric booster in another embodiment not supporting claim 1.

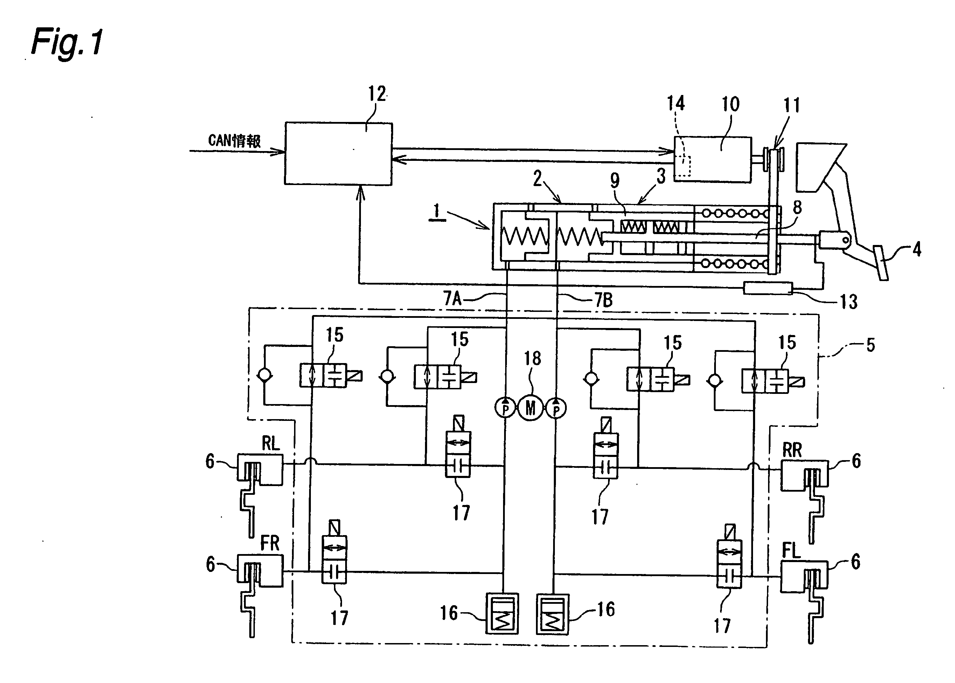

Hereinafter, preferred embodiments of the present invention will be described with reference to the accompanying drawings. Fig. 1 illustrates a structure of an entire system of a brake apparatus according to the present invention. In Fig. 1, reference numeral 1 denotes a hydraulic unit comprising a tandem master cylinder 2 and an electric booster 3 which are integrally provided. The hydraulic unit 1 generates a brake hydraulic pressure in the master cylinder 2 in response to an operation of a brake pedal 4. Reference numeral 5 denotes a hydraulic circuit for an anti-lock brake system (ABS). Reference numeral 6 denotes a wheel cylinder, which serves as a disk brake in the illustrated embodiment. The wheel cylinders 6 are connected such that, in the illustrated embodiment, a X-type circuit arrangement is formed, i.e., RL makes a pair with FR and RR makes a pair with FL, and the wheel cylinders 6 are connected through the ABS hydraulic circuit 5 to primary brake fluid passages 7A and 7B which respectively separately extend from pressure chambers of the tandem master cylinder 2.

The above-mentioned electric booster 3, as will be described later, comprises an input member 8 moving forward or backward in response to an operation of the brake pedal 4, an assist member 9 externally disposed so as to be movable relative to the input member 8, an electric actuator 11 displacing the assist member 9 forward or backward using an electric motor 10 as a driving source, and a booster controller 12 controlling a rotation of the electric motor 10. The booster controller 12 receives a signal from a stroke sensor (displacement detector) 13 detecting a displacement of the input member 8, a signal from a rotational position sensor 14 detecting a displacement of the assist member 9 based on a rotational position of the electric motor 10, and CAN information indicating an operation status of the ABS. The booster controller 12 controls the electric motor 10 based on these signals.

The ABS hydraulic circuit 5 comprises normally open inlet valves 15 for controlling supply and discharge of brake fluid from the master cylinder 2 to the wheel cylinders 6, normally closed outlet valves 17 for releasing brake fluid in the wheel cylinders 6 into reservoirs 16, and a pump 18 for pumping brake fluid in the reservoirs 16 to return it to the master cylinder 2. In the ABS circuit 5 configured as mentioned above, brake fluid in the wheel cylinder 2 is released into the reservoir 16 by controlling the inlet valve 15 and the outlet valve 17 to a closed position and an open position respectively in response to an instruction from a controlling means (not shown), whereby wheel locking is prevented.

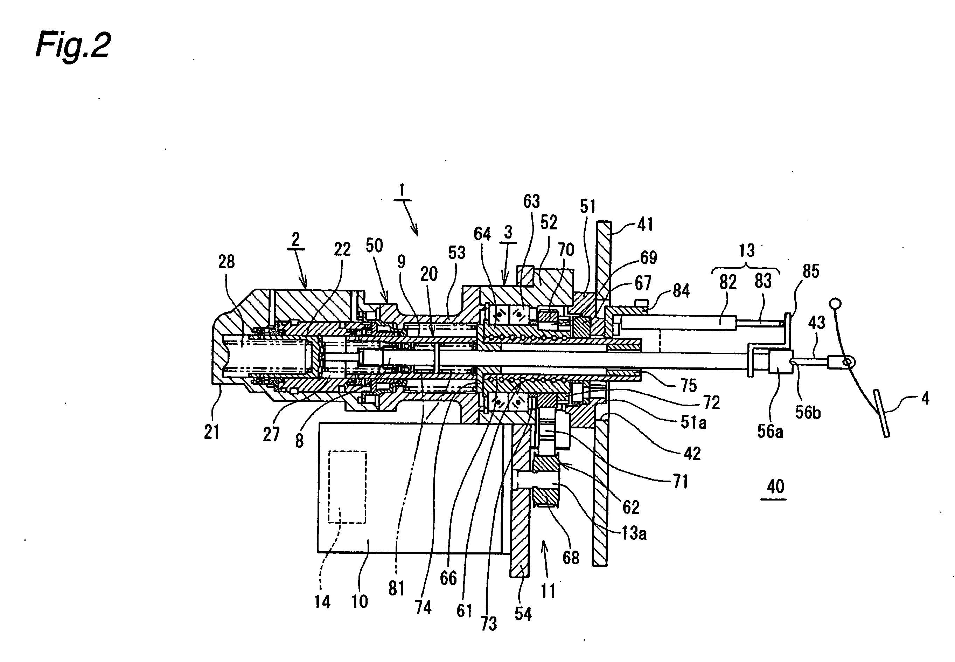

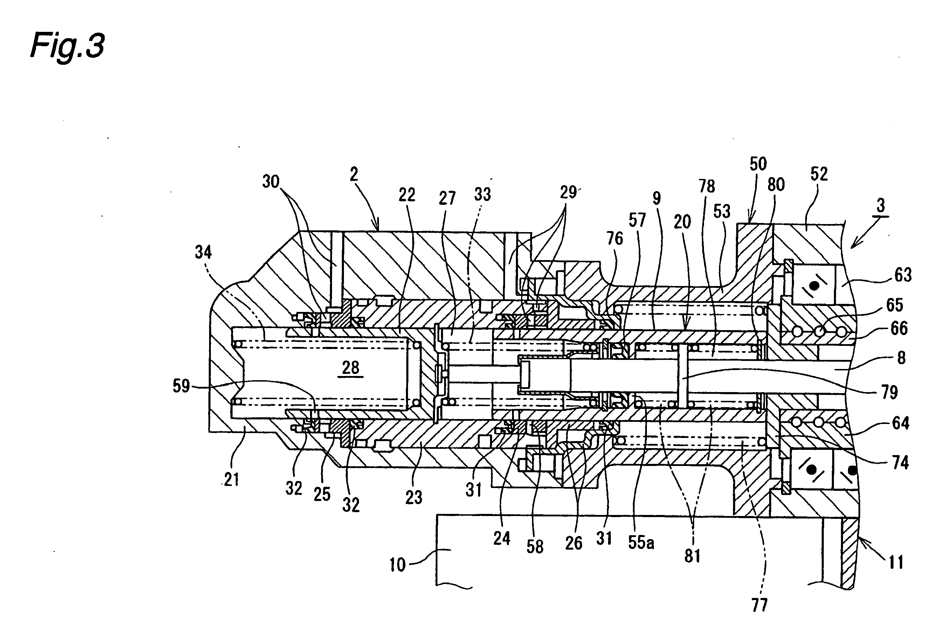

As best shown in Figs. 2 and 3, in the tandem master cylinder 2 of the hydraulic unit 15, the input member 8 and the assist member 9 constituting the electric booster 3 also constitute an assembly (piston assembly) 20 serving as a primary piston. The master cylinder 2 comprises a bottomed cylinder body 21 and a reservoir (not shown). On the bottom side of the cylinder 21, a secondary piston 22 is disposed, making a pair with the piston assembly 20 serving as the primary piston. In the illustrated embodiment, the piston assembly 20 and the secondary piston 22 are, as best shown in Fig. 3, slidingly guided by a sleeve 23 fitted in the cylinder 21 and two ring guides 24 and 25 disposed on respective either ends of the sleeve 23, and a pair of holding rings 26 interposed between a housing 50, which will be described later, of the electric booster 3 and the cylinder body 21. In the cylinder body 21, two pressure chambers 27 and 28 are defined by the piston assembly (primary piston) 20 and the secondary piston 22. When the pistons 20 and 22 move forward, brake fluid contained in the pressure chambers 27 and 28 is force-fed into the wheel cylinders 6.

Further, relief ports 29 and 30 are formed on the cylinder body 21, the sleeve 23 and the ring guides 24 and 25 for communication between the inside of the pressure chambers 27, 28 and the reservoir. A pair of seal members 31 are disposed on the sleeve 23, the pair of holding rings 26 and the cylinder body 21, with the relief port 29 sandwiched between the seal members 31, for sealing between the piston assembly 20, and the sleeve 23, the pair of holding rings 26 and the cylinder body 21. A pair of seal members 32 are disposed on the sleeve 23, the pair of holding rings 26 and the cylinder body 21, with the relief port 30 sandwiched between the seal members 32, for sealing between the secondary piston 22, and the sleeve 23, the pair of holding rings 26 and the cylinder body 21. The pressure chambers 27 and 28 are closed to the relief ports 29 and 30 when the pairs of the seal members 31 and 32 slidingly contact the outer surfaces of the associated pistons 20 and 22 respectively as the pistons 20 and 22 move forward. Return springs 33 and 34 are respectively disposed in the pressure chambers 27 and 28 for biasing backward the piston assembly 20, i.e., the primary piston and the secondary piston 22.

The housing 50 of the electric booster 3 of the hydraulic unit 1 comprises a first casing 52, and a second casing 53 concentrically coupled to the first casing 52. The first casing 52 is fixed to a front surface of a wall 41 of a vehicle compartment 40 through a ring-shaped attachment plate 51. The second casing 53 has a front end coupled to the cylinder body 21 of the tandem master cylinder 2. A support plate 54 is attached to the first casing 52. The electric motor 10 is fixed to the support plate 54. The attachment plate 51 is fixed to the vehicle compartment wall 41 so that an inner diameter boss portion 51a of the attachment plate 51 is positioned in an opening 42 of the vehicle compartment wall 41.

The assist member 9 of the piston assembly 20 has a cylindrical form. The input member 8 is disposed in the assist member 9 so as to be movable relative to the assist member 9. As shown in Fig. 2, an input rod 43 extending from the brake pedal 4 in the vehicle compartment 40 is coupled to a large-diameter portion 56a provided on a rear end of the input member 8, so that the input member 8 is movable forward or backward in response to an operation of the brake pedal 4 (pedal operation). The input rod 43 is coupled to a spherical concave portion 56b provided to the large-diameter portion 56a such that an tip of the input rod 43 is fitted therein, thereby allowing a swing movement of the input rod 43.

The assist member 9 of the piston assembly 20 includes a bulkhead 55a on an intermediate position of the longitudinal dimension of the inside thereof, and the input member 8 extends through the bulkhead 55a. A front end side of the assist member 9 is inserted in the pressure chamber (primary chamber) 27 in the master cylinder 2, while a front end side of the input member 8 is inserted inside the assist member 9 in the pressure chamber 27. A seal member 57 disposed on a front side of the bulkhead 55a of the assist member 9 provides a seal between the assist member 9 and the input member 8. Brake fluid is prevented from leaking from the pressure chamber 27 to the outside of the master cylinder 2 due to the provision of the seal member 57 and the above-mentioned seal members 31 disposed around the piston assembly 20. The front end portions of the assist member 9 and the secondary piston 22 are respectively pierced so as to form through-holes 58 and 59 in communication with the relief ports 29 and 30 in the master cylinder 2.

An electric actuator 11, which is driven with use of the electric motor 10 as its driving source and displaces the assist member 9 forward or backward, generally comprises a ball screw mechanism 61 disposed around the input member 8 inside the first casing 52 of the housing 50, and a rotation transmission mechanism 62 which slows down a rotation of the electric motor 10 and transmits it to the ball screw mechanism 61.

The ball screw mechanism 61 comprises a nut member 64 rotatably supported by the first casing 52 through a bearing (angular contact bearing) 63, and a hollow screw shaft 66 meshed with the nut member 64 through a ball 65. A rear end of the screw shaft 66 is slidably but non-rotatably supported by a ring guide 67 fixed to the attachment plate 51 of the housing 50. By this arrangement, the screw shaft 66 is linearly movable in response to a rotation of the nut member 64. The rotation transmission mechanism 62 comprises a first pulley 68 attached to an output shaft 13a of the electric motor 10, a second pulley 70 non-rotatably attached to the nut member 64 through a key 69, and a belt (timing belt) 71 wound around a portion between the two pulleys 68 and 70. The second pulley 70 has a larger diameter than the first pulley 68, so that a rotation of the electric motor 10 is slowed down before being transmitted to the nut member 64 of the ball screw mechanism 61. The angular contact bearing 63 is pressurized through the second pulley 70 and the collar 73 by a nut 72 screwed into the nut member 64.

A flange member 74 and a tubular member 75 are fixedly fitted to the front end and the rear end of the hollow screw shaft 66 of the ball screw mechanism 61, respectively. The flange member 74 and the tubular member 75 each have an inner diameter set such that the members 74 and 75 can serve as a guide for guiding a sliding movement of the input member 8. When the screw shaft 66 moves forward to the left side of the drawings, the flange member 74 comes into contact with the rear end of the assist member 9, thereby causing a forward movement of the assist member 9. A return spring 77 is disposed inside the second casing 53 of the housing 50. The return spring 77 has one end engaged to an annular protrusion 76 formed inside the second casing 53, and the other end abutting against the flange member 74. Due to the provision of the return spring 77, the screw shaft 66 is positioned at a home position, as shown in the drawings, when the brake is not in operation.

As best shown in Fig. 3, an annular space 78 is defined between the input member 8 and the assist member 9. A pair of springs (spring means) 81 are disposed in the annular space 78. The pair of springs 81 each have one end engaged to a flange portion 79 provided to the input member 8. Respective other ends of the pair of springs 81 are engaged to bulkhead 55a of the assist member 9 and to a retaining ring 80 fitted into the rear end of the assist member 9. The pair of springs 81 serves to maintain the input member 8 and the assist member 9 in a neutral position of relative displacement when the brake is not in operation.

As shown in Fig. 2, the stroke sensor 13 of the electric booster 3 is disposed in the vehicle compartment 40. The stroke sensor 13 comprises a body portion 82 having a built-in resistive element, and an extensible and retractable sensor rod 83 extending from the body portion 82. The body portion 82 is attached to a bracket 84 fixed to the boss portion 51a of the attachment plate 51 of the housing 50 so that the body portion 82 and the sensor rod 83 extend parallel to the input member 8. The sensor rod 83 is constantly urged so as to be maintained in its extending state by a spring disposed in the body portion 82, and abuts at its front end against a bracket 85 fixed to the rear end of the input member 8. On the other hand, the rotational position sensor 14 for detecting a displacement of the assist member 9 is disposed in the electric motor 10. A position of the assist member 9 can be calculated based on a rotational position of the electric motor 10, which is detected by the rotational sensor 14, and a reduction ratio and lead of the ball screw mechanism 61. In this way, a relative displacement detector for detecting a relative displacement between the input member 8 and the assist member 9 comprises the stroke sensor 13 and the rotational position sensor 14.

Next, an operation of the brake apparatus configured as set out above will be described.

When the ABS is not in operation, pressing down the brake pedal 4 causes the input member 8 in the electric booster 3 to move forward, and the displacement of the input member 8 is detected by the stroke sensor 13. Then, upon receiving a signal from the stroke sensor 13, the booster controller 12 outputs an actuation instruction to the electric motor 10, causing the electric motor 10 to rotate. The rotation of the electric motor 10 is transmitted to the ball screw mechanism 61 through the rotation transmission mechanism 62, and then the screw shaft 66 moves forward causing the assist member 9 to move forward accordingly. In other words, the input member 8 and the assist member 9 integrally move forward, whereby hydraulic pressures are generated in the pressure chambers 27 and 28 in the tandem master cylinder 2, and the generated hydraulic pressures are force-fed into the wheel cylinders 6.

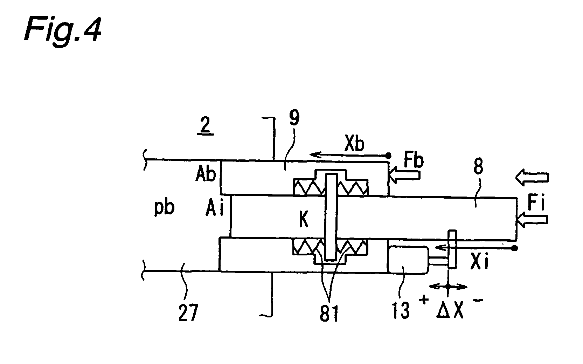

Referring to Fig. 4, a pressure equilibrium equation in the master cylinder 2 is expressed as equation (1) provided below, where Ai represents a cross-sectional area of the input member 8, Ab represents a cross-sectional area of the assist member 9, Fi represents a generative force of the input member 8 on the portion facing the pressure chamber 27 of the master cylinder 2 (pedal thrust), Fb represents a generative force of the assist member 9 on the same portion (assist thrust), K represents a spring constant of the spring 81 between the input member 8 and the assist member 9, $\Delta x$ represents an amount of relative displacement between the input member 8 and the assist member 9, and Pb represents a hydraulic pressure in the pressure chamber 27 (28) of the master cylinder 2. The amount of relative displacement is defined as $\Delta X = Xb - Xi$, where Xi represents a displacement of the input member 8 (pedal stroke amount) and Xb represents a displacement of the assist member 9 (booster stroke amount). Therefore, the value of Δx is 0 at the neutral position of relative displacement, a positive value when the assist member 9 moves forward relative to the input member 8, and a negative value when the input member 8 moves forward relative to the assist member 9. Sliding resistance of the seals is not considered in the pressure equilibrium equation (1).

$$Pb = (Fi - K\Delta X) / Ai = (Fb + K\Delta X) / Ab \ldots (1)$$

On the other hand, a boost ratio n is expressed as equation (2) presented below. Therefore, the boost ratio n can be expressed as equation (3) presented below by assigning Pb in the pressure equilibrium equation (1) into equation (2). In this case, when a rotation of the electric motor 10 is controlled such that the relative displacement amount ΔX is calculated as 0 based on a detection result of the stroke sensor 13 (feedback control), the boost ratio n is expressed as equation (4) presented below, and therefore it is possible to achieve a pedal feeling similar to that of a system in which a typical pneumatic booster (vacuum booster) and a master cylinder having a cross-sectional area of Ai + Ab are combined. However, if the spring constant K of the spring 81 is set to a relatively large value, and the relative displacement amount ΔX is set to a predetermined negative value and a rotation of the electric motor 10 is controlled such that the relative displacement amount ΔX of the predetermined value can be obtained, then, according to equation (3), the boost ratio n becomes (1 - K ΔX / Fi) times larger, and therefore a corresponding powerful brake assist can be provided. That is, it is possible to significantly reduce a required pedal pressure.

$$n = Pb (Ab + Ai) / Fi \ldots (2)$$

$$n = ( 1 - K\Delta X / Fi) \times (Ab / Ai + 1) \ldots (3)$$

$$n = (Ai + Ab) / Ai \ldots (4)$$

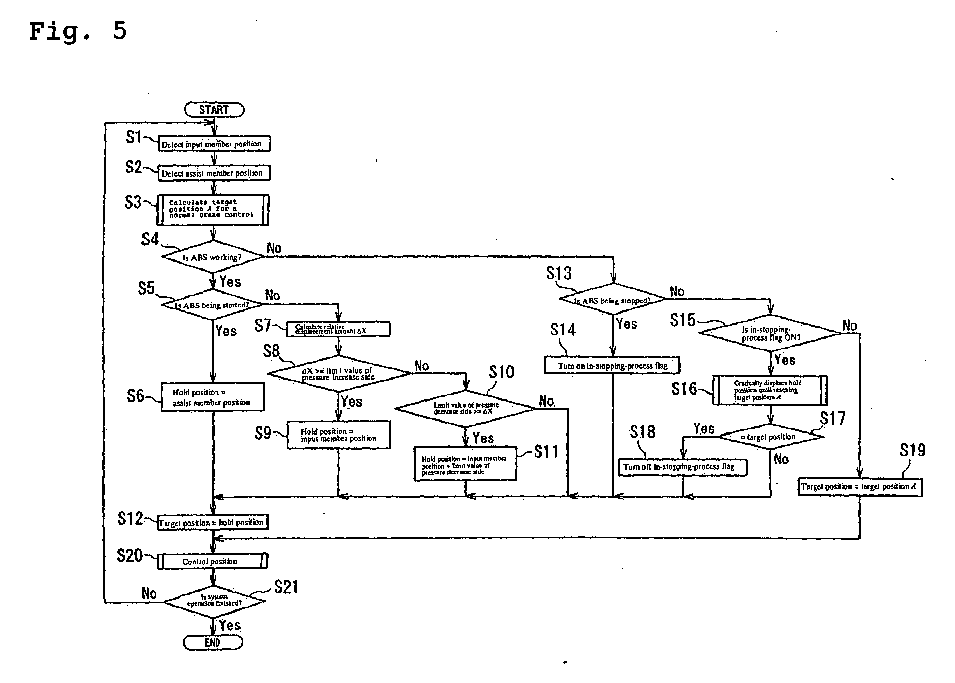

On the other hand, when the ABS is in operation, the electric booster 3 is controlled according to a process flow shown in Fig. 5 (which is not part of the claimed invention). Here, each step (S) in the process flow will be described in detail.

S1: A position of the input member 8 which has moved forward in response to a depression of the brake pedal 4 is detected by the stroke sensor 13.

S2: A position of the assist member 9 is calculated based on a rotational position of the electric motor 10 detected by the rotational position sensor 14.

S3: A target position A of the assist member 9 when normal brake control is performed is calculated based on the position of the input member 8 detected at step S1.

S4: Based on CAN information of the vehicle, it is determined whether the ABS is working.

S5: If it is determined at S4 that the ABS is working, it is then determined whether the ABS is being started.

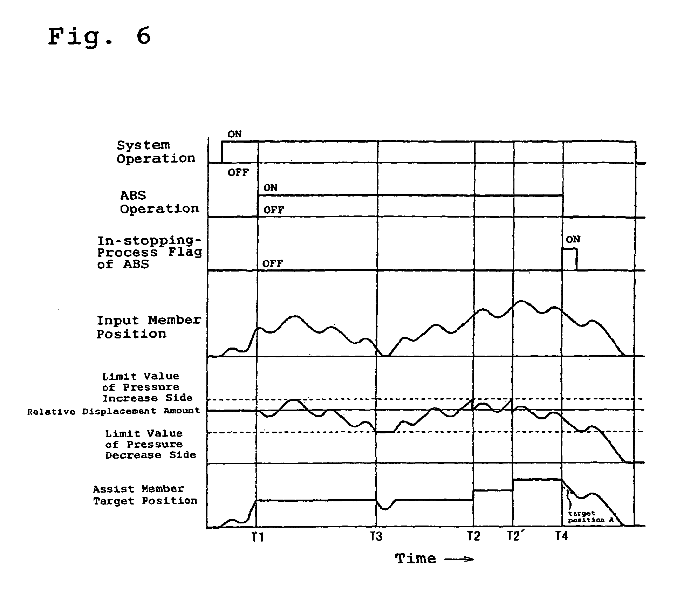

S6: If it is determined at S5 that the ABS is being started, then a hold position is set to the position of the assist member 9 calculated at S2. The position of the input member 8 and the position of the assist member 9 at this time is shown on time T1 in a time chart of Fig. 6 (which is not part of the claimed invention).

S7: If it is determined at S5 that the ABS is not being started(already started), then the relative displacement amount Δx is calculated based on the position of the input member 8 detected at S1, and the position of the assist member 9 calculated at S2.

S8: It is determined whether the relative displacement amount Δx calculated at S7 is equal to or more than a predetermined limit value of a pressure increase side.

S9: If it is determined at S8 that the relative displacement amount ΔX calculated at S7 is equal to or more than the limit value of the pressure increase side, then the hold position of the assist member 9 is set to the position of the input member 8 detected at S1. The position of the input member 8 and the position of the assist member 9 at this time is shown on time T2 in the time chart of Fig. 6 (which is not part of the claimed invention).

Hereafter, description will be made with regard to displacements of the input member 8 and the assist member 9. When a vehicle enters onto a high road from a low road causing the driver to further depress the brake pedal 4 while the ABS is working, it is necessary for the master cylinder 2 to increase hydraulic pressures in the wheel cylinders 6. For such a scenario, the limit value of the relative displacement amount ΔX on the pressure increase side is set to a small value in order to respond to such additional depression of the brake pedal 4, and as described in the above S8 and S9, when the relative displacement amount ∆X is equal to or more than the limit value of the pressure increase side, the hold position of the assist member 9 is set to the position of the input member 8, so that the target position is displaced forward according to the forward movement of the input member 8 (disposed to the pressure increase side). As a result, it is possible to increase the pressure responsive to additional depression of the brake pedal 4 when a vehicle enters onto a high µ road from a low µ road while the ABS is working.

S10: If it is determined at S8 that the relative displacement amount ∆x calculated at S7 is less than the limit value of the pressure increase side, then it is determined whether the relative displacement amount ∆X is equal to or less than a predetermined limit value of a pressure decrease side, i.e., whether the brake pedal 4 is returned by the driver. The absolute value of the relative displacement amount ∆X is controlled to be less than the limit value of the pressure decrease side so as to keep the relative displacement amount ∆X to within a range such that the springs 81 (Figs. 2 and 3) disposed between the input member 8 and the assist member 9 are prevented from being excessively compressed, whereby generation of abnormal noise is prevented. Accordingly, the limit value of the pressure decrease side is set such that the springs 81 are kept longer than their minimum length.

S11: If it is determined at S 10 that the relative displacement amount ∆X calculated at S7 is equal to or less than the limit value of the pressure decrease side, then the hold position of the assist member 9 is set to a value resulting from adding the limit value of the pressure decrease side to the position detected at S1, i.e., the position of the input rod 8 after the input rod 8 has moved back. The position of the input member 8 and the position of the assist member 9 at this time are shown on time T3 in the time chart of Fig. 6 (which is not part of the claimed invention). If it is determined at S 10 that the relative displacement amount ∆X calculated at S7 is more than the limit value of the pressure decrease side, then the hold position is not updated.

S12: The target position of the assist member 9 is set to the hold position set at any of S6, S9, S11 and S16.

S13: If it is determined at S4 that the ABS is not working, then it is determined whether the ABS is being stopped.

S14: If it is determined at S13 that the ABS is being stopped (the ABS is being switched from ON to OFF), then an in-stopping-process flag is turned on.

S15: If it is determined at S13 that the ABS has already stopped (in a period after time T4 in the time chart of Fig. 6; which is not part of the claimed invention), then it is determined whether the in-stopping-process flag is ON.

S16: If it is determined at S15 that the ABS is in a stopping process (the in-stopping-process flag is ON), then the assist member 9 is gradually displaced to the target position A calculated at S3 in order to avoid impairing pedal feeling due to a sudden change in pedal pressure. If the hold position of the assist member 9.is immediately displaced to the target position A calculated at S3 (indicated by a broken line in Fig. 6; which is not the part of the claimed invention), the hydraulic pressure in the master cylinder 2 could be also caused to change due to sudden operation of the assist member 9, which could in turn result in a sudden change in the pedal pressure. The position of the input member 8 and the position of the assist member 9 at this time is indicated by a solid line in an area after time T4 in the time chart of Fig. 6 (which is not part of the claimed invention).

S17: It is determined whether the hold position of the assist member 9 set at S16 reaches the target position A. If it is determined at S17 that the assist member 9 has not yet reached the target position A, then the in-stopping-process flag of the ABS is kept ON.

S18: If it is determined at S17 that the hold position of the assist member 9 has reached the target position A, then the in-stopping-process flag of the ABS is turned off.

S19: If it is determined at S15 that the in-stopping-process flag of the ABS is not ON (the ABS is not actuated or the stopping process of the ABS is finished), then the target position of the assist member 9 is set to the target position A calculated at S3.

S20: Position control is performed according to the target position of the assist member 9 set at S 12 or S 19.

S21: It is determined whether the system operation is finished. If it is determined that the system operation is not finished, then the flow goes backs to S1 to continue the process. If it is determined that the system operation is finished, then the control of the electric booster 3 is ended.

In this way, when an operation of the ABS is detected, the electric actuator 11 is controlled such that the assist member 9 is stopped at a limited position relative to a displacement of the input member 8. Therefore, a hydraulic pressure in the master cylinder 2 is prevented from being increasingly varied to thereby provide an improved brake feeling.

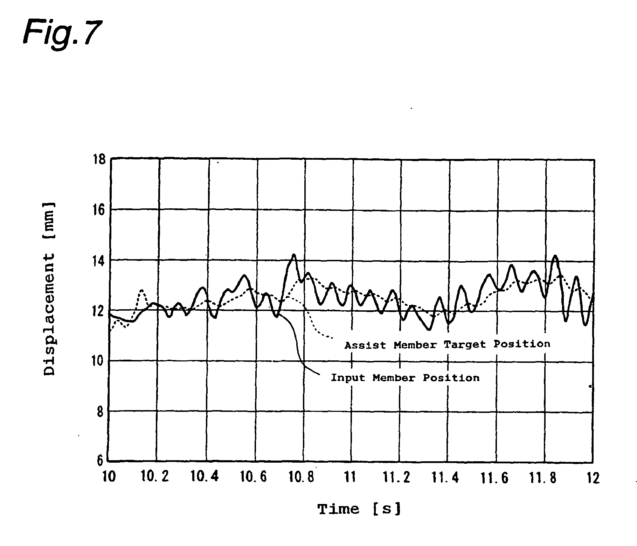

In the embodiment described above, when a hydraulic pressure in the master cylinder 2 is changed due to an operation of the ABS, the target position of the assist member 9 is set to the position of the input member 8 without deduction. In this embodiment, however, another method for controlling the electric booster can be employed such that a displacement amount of the input member 8 is filtered through, for example, a low pass filter, and the target position of the assist member 9 is set to the resulting damped value, so that the assist member 9 can be displaced by a damped amount relative to the displacement of the input member 8. Fig. 7 shows the relationship of positions of the input member 8, and target positions of the assist member 9 each of which is obtained by filtering a position of the input member 8 through the low pass filter and damping it. By this controlling method, a displacement of the input member 8 is restricted, whereby a change in a hydraulic pressure in the master cylinder 2 is alleviated and therefore deterioration in pedal feeling is prevented.

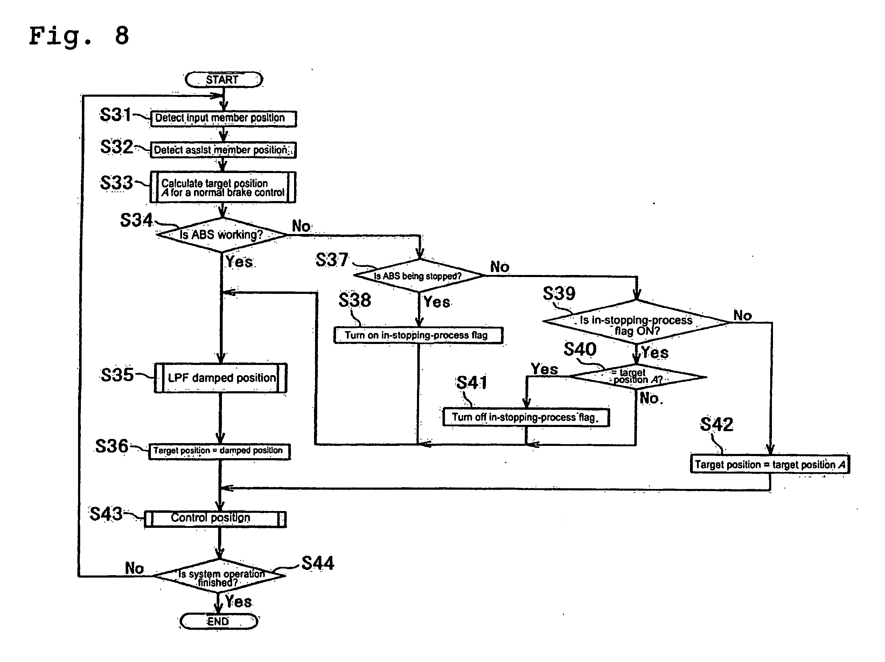

Fig. 8 illustrates a flow of a process for performing the above mentioned control method. Hereafter, each step of this process will be described in detail.

S31: A position of the input member 8 which has moved forward in response to a depression of the brake pedal 4 is detected by the stroke sensor 13.

S32: A position of the assist member 9 is calculated based on a rotational position of the electric motor 10 detected by the rotational position sensor 14.

S33: The target position A of the assist member 9 in the case that a normal brake control is performed is calculated based on the position of the input member 8 detected at S31.

S34: Based on CAN information of the vehicle, it is determined whether the ABS is working.

S35: If it is determined at S34 that the ABS is working, then the target position A of the assist member 9 calculated at S33 is filtered through the low pass filter (LPF), and a damped position is obtained.

S36: The target position of the assist member 9 is set to the damped position obtained at S35.

S37: If it is determined at S34 that the ABS is not working, then it is determined whether the ABS is being stopped.

S38: If it is determined at S37 that the ABS is being stopped (the ABS is switched from ON to OFF), then the in-stopping-process flag is turned on.

S39: If it is determined at S37 that the ABS is already stopped, then it is determined whether the in-stopping-process flag is ON.

S40: If it is determined at S39 that the ABS is in a stopping process, then it is determined whether the target position of the assist member 9 set at S36 is equal to the target position A. If the damped position of the assist member 9 does not reach the target position A, then the in-stopping-process flag of the ABS is kept ON.

S41: If it is determined at S40 that the target position of the assist member 9 is equal to the target position A, then the in-stopping-process flag of the ABS is turned off.

S42: If it is determined at S39 that the in-stopping-process flag of the ABS is not ON (the ABS is not actuated or the stopping process of the ABS is finished), then the target position of the assist member 9 is set to the target position A calculated at S33.

S43: Position control is performed according to the target position of the assist member 9 set at S36 or S42.

S44: It is determined whether the system operation is finished. If it is determined that the system operation is not finished, then the flow goes backs to S31 to continue the process. If it is determined that the system operation is finished, then the control of the electric booster 3 is ended.

In this way, when an operation of the ABS is detected, the electric actuator 11 is controlled at a position of the time of the detection such that the assist member 9 is displaced by a damped amount relative to the displacement of the input member 8, whereby a hydraulic pressure in the master cylinder 2 is prevented from being increasingly varied and therefore brake feeling can be improved. In the electric booster 3 in the embodiment described above, the piston assembly 20 (input member 8 and assist member 9) is disposed so that its front end faces the pressure chamber 27 of the master cylinder 2, and the piston assembly 20 is thereby also used as a primary piston of the tandem master cylinder 2. However, in some embodiments, a piston assembly 20 of an electric booster may be disposed as a body separate from a primary piston of a master cylinder 2.

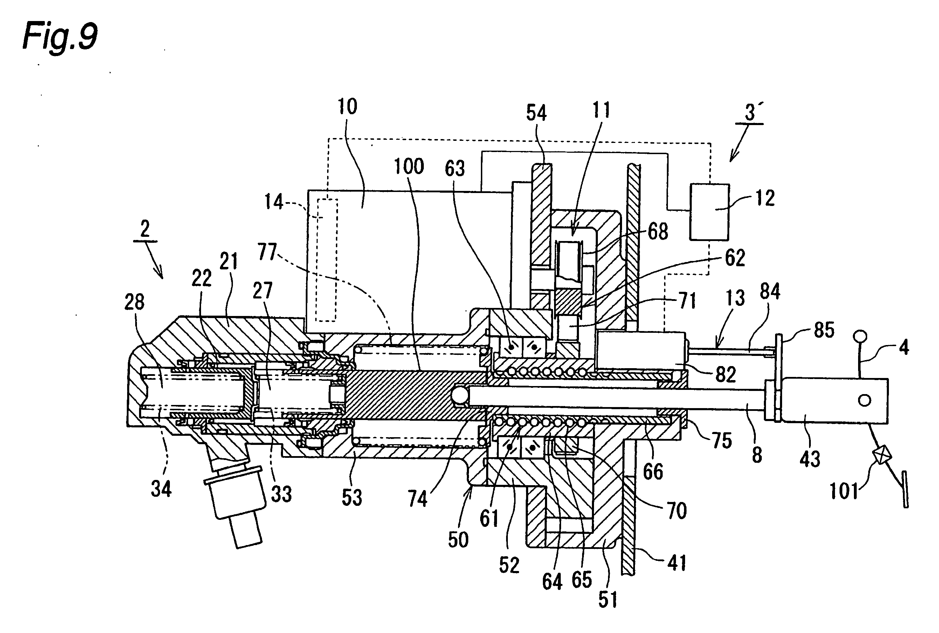

Fig. 9 (which is not part of the claimed invention) illustrates an embodiment in which a piston assembly 20 (input member 8 and assist member 9) is disposed as a body separate from a primary piston 100 of a master cylinder 2. Since the basic structure of an electric booster 3' in this embodiment is identical to that of the electric booster 3 in the before discussed embodiment, elements corresponding to the elements shown in Figs. 2 and 3 will be denoted by the same reference numerals, and descriptions thereof will not be made in further detail. In this embodiment, the above-described assist member 9 (Figs. 2 and 3) of the piston assembly 20 is replaced with a flange member 74 corresponding to the above-described annular flange member 74 fixedly fitted to the front end of the hollow screw shaft 66 of the ball screw mechanism 61. The primary piston 100 has a rear end extending to abut against the flange member 74. In this embodiment, the pair of springs 81 for maintaining the input member 8 and the assist member 9 in the neutral position of relative displacement when the brake is not in operation are not provided, and a front end of the input member 8 is directly connected to the rear end of the primary piston 100. Further, in this embodiment, a pedal pressure sensor 101 is provided to a brake pedal 4. An electric actuator 11 is controlled according to a pedal pressure detected by the pedal pressure sensor 101.

The electric booster 3' works substantially similarly to the electric booster 3 in the before-discussed embodiment. When the brake pedal 4 (Fig. 2) is pressed down and the input member 8 moves forward while the ABS is not in operation and the brake is in a normal control state, according to a pedal pressure detected by the pedal pressure sensor 101, and in response to an instruction from a booster controller 12, an electric motor 10 starts a rotational movement, thereby causing the flange member (assist member) 74 to move forward integrally with the input member 8. Then, the primary piston 100 is pushed in and hydraulic pressures are generated in pressure chambers 27 and 28 in the master cylinder 2. When the ABS is in operation, control is performed such that an operation of the flange member 74 as an assist member is restricted, and thereby a pedal pressure detected by the pedal pressure sensor 101 is not substantially changed. As a result, a hydraulic pressure in the master cylinder 2 is prevented from being increasingly varied and therefore brake feeling can be improved. A particular advantage of this embodiment is that use of the primary piston 100 of the tandem master cylinder 2 enables the existing master cylinder 2 to be utilized without modification, and therefore a simple structure of the hydraulic unit 1 can be realized.

As discussed above, according to a brake apparatus of the present invention, when a hydraulic pressure in the master cylinder is changed due to an operation of the anti-lock brake system, an operation of the assist member is restricted, thereby preventing the hydraulic pressure in the master cylinder from being increasingly varied, and improving brake feeling. In the present invention, a controlling method for restricting an operation of the assist member while the anti-lock brake system is in operation may be embodied by any suitable method. According to the invention, when an operation of the anti-lock brake system is detected, the electric actuator may be controlled such that the assist member is displaced by a damped amount relative to a displacement of the input member. In this case, if the electric actuator comprises an electric motor and a reversible transmission mechanism for transmitting a rotational force of the electric motor to the assist member as a linear thrust, the control method may be performed such that, when an operation of the anti-lock brake system is detected, a current for clamping the assist member can be supplied to the electric motor.

In an embodiment not supporting the present invention, a relative displacement detection means for detecting a relative displacement between the input member and the assist member may be provided and when the anti-lock brake system is in operation, if a relative displacement detected by the relative displacement detection means exceeds a predetermined limit value, a stop position of the assist member may be displaced in a direction in which the input member moves. This control method is illustrated on time T2 and T2' in the time chart of Fig. 6 (which is not part of the claimed invention).

## Claims

1.  A brake apparatus comprising:

    a master cylinder (2) which generates a brake hydraulic pressure;
    an anti-lock brake system (5) disposed between the master cylinder (2) and a wheel cylinder (6) and having a pump (18) returning brake fluid to the master cylinder (2) during an operation of the anti-lock brake system (5); and
    an electric booster (3) including an input member (8) which moves forward or backward in response to an operation of a brake pedal (4), and an assist member (9) which moves forward or backward by being driven by an electric actuator (11),
    wherein the electric booster (3) generates a boosted brake hydraulic pressure in the master cylinder (2) under an input thrust provided to the input member (8) through the brake pedal (4) and an assist thrust provided to the assist member (9) by the electric actuator (11);
    the electric booster (3) transmits a part of a reactive force generated by the brake hydraulic pressure to the input member (8), and another part of the reactive force to the assist member (9),
    **characterized in that**
    when the anti-lock brake system (5) is in operation, the electronic actuator (11) is controlled such that the assist member (9) is displaced in a restricted manner relative to a displacement of the input member (8) without stopping the assist member.

2.  A brake apparatus according to Claim 1, wherein the assist member (9) has a cylindrical form and is externally disposed around the input member (8), and each of a front end of the input member (8) and a front end of the assist member (9) faces a pressure chamber (27) in the master cylinder (2) so that the input member (8) and the assist member (9) serve as a piston (20) of the master cylinder (2).

3.  A brake apparatus according to Claim 1 or 2, wherein the electric actuator (11) is controlled such that, when an operation of the anti-lock brake system (5) is detected, the assist member (9) is displaced by a damped amount relative to a displacement of the input member (8).

4.  A brake apparatus according to any one of Claims 1-3, wherein the electric actuator (11) comprises an electric motor (10) and a reversible transmission mechanism (61) for transmitting a rotational force of the electric motor (10) to the assist member (9) as a linear thrust, and
    a current for displacing the assist member (9) while the operation of the assist member (9) is restricted relative to the displacement of the input member (8) is supplied to the electric motor (10) when an operation of the anti-lock brake system (5) is detected.

**5.** A brake apparatus according to any one of Claims 1-4, wherein
the brake apparatus further comprises a displacement detector (13) for detecting a displacement of the input member (8), and
when an operation of the anti-lock brake system (5) is detected, a target position (A) of the assist member (9) is set based on the displacement of the input member (8) detected by the displacement detector (13), and when the operation of the anti-lock brake system (5) is stopped, the electric actuator (11) is controlled such that the assist member (9) is displaced to the set target position (A).

**6.** A brake apparatus according to any one of Claims 1-5, further comprising a controller (12) for controlling the electric actuator (11).

**Patentansprüche**

**1.** Bremsvorrichtung aufweisend:

einen Hauptzylinder (2), der einen Bremshydraulikdruck erzeugt; und
ein Antiblockierbremssystem (5), das zwischen dem Hauptzylinder (2) und einem Radzylinder (6) angeordnet ist und eine Pumpe (18) aufweist, die Bremsfluid zu dem Hauptzylinder (2) während einer Betätigung des Antiblockierbremssystems (5) zurückführt; und
einen elektrischen Verstärker (3) aufweisend ein Eingangselement (8), das sich als Antwort auf eine Betätigung eines Bremspedals (4) nach vorne oder zurück bewegt und ein Unterstützungselement (9), das sich nach vorne oder zurück bewegt, indem es von einem elektrischen Aktuator (11) angetrieben wird,
wobei der elektrische Verstärker (3) einen verstärkten Bremshydraulikdruck in dem Hauptzylinder (2) bei einem Eingangsschub, der dem Eingangselement (8) durch das Bremspedal (4) zur Verfügung gestellt wird, und einem Unterstützungsschub, der dem Unterstützungselement (9) durch den elektrischen Aktuator (11) zur Verfügung gestellt wird, erzeugt;
wobei der elektrische Verstärker (3) einen Teil einer Reaktionskraft, die von dem Bremshydraulikdruck erzeugt wird, an das Eingangselement (8) und einen weiteren Teil der Reaktionskraft an das Unterstütungselement (9) überträgt, **dadurch gekennzeichnet, dass**,
wenn das Antiblockierbremssystem (5) sich in Betrieb befindet, der elektronische Aktuator (11) so gesteuert wird, dass das Unterstützungselement (9) auf eine begrenzte Weise relativ zu einem Versatz des Eingangs des Elements (8) versetzt wird, ohne das Unterstützungselement anzuhalten.

**2.** Bremsvorrichtung nach Anspruch 1, bei der das Unterstützungselement (9) eine zylindrische Form aufweist und extern um das Eingangselement (8) angeordnet ist und wobei jedes aus einem vorderen Ende des Eingangselements (8) und einem vorderen Ende des Unterstützungselements (9) auf eine Druckkammer (27) in dem Hauptzylinder (2) zeigt, sodass das Eingangselement (8) und das Unterstützungselement (9) als ein Kolben (20) des Hauptzylinders (2) wirken.

**3.** Bremsvorrichtung nach Anspruch 1 oder 2, bei der der elektrische Aktuator (11) so gesteuert wird, dass, wenn eine Betätigung des Antiblockierbremssystems (5) erfasst wird, das Unterstützungselement (9) um einen gedämpften Betrag relativ zu dem Versatz des Eingangselements (8) versetzt wird.

**4.** Bremsvorrichtung nach einem der Ansprüche 1 bis 3, bei der der elektrische Aktuator (11) einen elektrischen Motor (10) und einen umkehrbaren Übertragungsmechanismus (61) zum Übertragen einer Rotationskraft des elektrischen Motors (10) an das Unterstützungselement (9) als einen linearen Schub aufweist und
ein Strom zum Versetzen des Unterstützungselements (9) relativ zu dem Versatz des Eingangselements (8), während der Betrieb des Unterstützungselements (9) begrenzt ist, an den elektrischen Motor (10) bereitgestellt wird, wenn ein Betrieb des Antiblockierbremssystems (5) erfasst wird.

**5.** Bremsvorrichtung nach einem der Ansprüche 1 bis 4,
bei der die Bremsvorrichtung ferner einen Versatzdetektor (13) zum Erfassen eines Versatzes des Eingangselements (8) aufweist und,
wenn ein Betrieb des Antiblockierbremsystems (5) erfasst wird, eine Zielposition (A) des Unterstützungselements (9) basierend auf dem Versatz des Eingangselements (8) eingestellt wird, der von dem Versatzdetektor (13) erfasst wird, und, wenn der Betrieb des Antiblokierbremssystems (5) angehalten wird, der elektrische Aktuator (11) gesteuert wird, sodass das Unterstützungselement (9) zu der eingestellten Zielposition (A) versetzt wird.

**6.** Bremsvorrichtung nach einem der Ansprüche 1 bis 5, ferner aufweisend ein Steuergerät (12) zum Steuern des elektrischen Aktuators (11).

**Revendications**

**1.** Appareil de freinage comprenant :

un maître-cylindre (2) qui produit une pression hydraulique de freinage ;
un système antiblocage de frein (5) disposé entre le maître-cylindre (2) et un cylindre de roue (6) et ayant une pompe (18) renvoyant du liquide de freins vers le maître-cylindre (2) pendant une mise en oeuvre du système antiblocage de frein (5) ; et
un suramplificateur électrique (3) incluant un élément d'entrée (8) qui se déplace en avant ou en arrière en réponse à une mise en oeuvre d'une pédale de frein (4), et un élément d'assistance (9) qui se déplace en avant ou en arrière en étant entraîné par un actionneur électrique (11),
dans lequel le suramplificateur électrique (3) produit une pression hydraulique de freinage augmentée dans le maître-cylindre (2) sous une poussée d'entrée fournie à l'élément d'entrée (8) par l'intermédiaire de la pédale de frein (4) et une poussée d'assistance fournie à l'élément d'assistance (9) par le dispositif d'actionnement électrique (11) ;
le suramplificateur électrique (3) transmet une partie d'une force réactive produite par la pression hydraulique de freinage à l'élément d'entrée (8), et une autre partie de la force réactive à l'élément d'assistance (9),
**caractérisé en ce que**
lorsque le système antiblocage de frein (5) est en fonctionnement, l'actionneur électronique (11) est commandé de sorte que l'élément d'assistance (9) est déplacé d'une façon limitée par rapport à un déplacement de l'élément d'entrée (8) sans arrêter l'élément d'assistance.

**2.** Appareil de freinage selon la revendication 1, dans lequel l'élément d'assistance (9) a une forme cylindrique et est disposé à l'extérieur autour de l'élément d'entrée (8), et chacune d'une extrémité avant de l'élément d'entrée (8) et d'une extrémité avant de l'élément d'assistance (9) fait face à une chambre de pression (27) dans le maître-cylindre (2) de sorte que l'élément d'entrée (8) et l'élément d'assistance (9) servent de piston (20) du maître-cylindre (2).

**3.** Appareil de freinage selon la revendication 1 ou 2, dans lequel l'actionneur électrique (11) est commandé de sorte que, quand un fonctionnement du système antiblocage de frein (5) est détecté, l'élément d'assistance (9) est déplacé d'une quantité amortie par rapport à un déplacement de l'élément d'entrée (8).

**4.** Appareil de freinage selon l'une quelconque des revendications 1 à 3, dans lequel l'actionneur électrique (11) comprend un moteur électrique (10) et un mécanisme de transmission réversible (61) pour transmettre une force de rotation du moteur électrique (10) à l'élément d'assistance (9) comme une poussée linéaire, et
un courant pour déplacer l'élément d'assistance (9) tandis que la mise en oeuvre de l'élément d'assistance (9) est limitée par rapport au déplacement de l'élément d'entrée (8) est fourni au moteur électrique (10) quand un fonctionnement du système antiblocage de frein (5) est détecté.

**5.** Appareil de freinage selon l'une quelconque des revendications 1 à 4, dans lequel
l'appareil de freinage comprend en outre un détecteur de déplacement (13) pour détecter un déplacement de l'élément d'entrée (8), et
quand un fonctionnement du système antiblocage de frein (5) est détecté, une position cible (A) de l'élément d'assistance (9) est fixée en se basant sur le déplacement de l'élément d'entrée (8) détecté par le détecteur de déplacement (13), et lorsque la mise en oeuvre du système antiblocage de frein (5) est arrêtée, le dispositif d'actionnement électrique (11) est commandé de sorte que l'élément d'assistance (9) est déplacé jusqu'à la position cible fixée (A).

**6.** Appareil de freinage selon l'une quelconque des revendications 1 à 5, comprenant en outre une unité de commande (12) pour commander l'actionneur électrique (11).

## Fig.1

CAN情報

EP 1 964 739 B1

**Fig.2**

*Fig.3*

EP 1 964 739 B1

## Fig.4

# Fig. 5

START

S1 — Detect input member position

S2 — Detect assist member position

S3 — Calculate target position A for a normal brake control

S4 — Is ABS working? — No

S5 — Is ABS being started? — No

Yes

S7 — Calculate relative displacement amount ΔX

S8 — ΔX >= limit value of pressure increase side — No

Yes

S6 — Hold position = assist member position

S9 — Hold position = input member position

S10 — Limit value of pressure decrease side >= ΔX — No

Yes

S11 — Hold position = input member position + limit value of pressure decrease side

S13 — Is ABS being stopped? — No

S14 — Turn on in-stopping-process flag

Yes

S15 — Is in-stopping-process flag ON? — No

Yes

S16 — Gradually displace hold position until reaching target position A

S17 — = target position

S18 — Turn off in-stopping-process flag

Yes

No

S19 — Target position = target position A

S12 — Target position = hold position

S20 — Control position

S21 — Is system operation finished? — No

Yes

END

# Fig. 6

# *Fig.7*

# Fig. 8

START

S31 — Detect input member position

S32 — Detect assist member position

S33 — Calculate target position A for a normal brake control

S34 — Is ABS working?

Yes → S35 — LPF damped position

No → S37 — Is ABS being stopped?

S37 Yes → S38 — Turn on in-stopping-process flag

S37 No → S39 — Is in-stopping-process flag ON?

S39 Yes → S40 — = target position A?

S40 Yes → S41 — Turn off in-stopping-process flag.

S40 No

S39 No → S42 — Target position = target position A

S36 — Target position = damped position

S43 — Control position

S44 — Is system operation finished?

No

Yes → END

EP 1 964 739 B1

18

Fig.9

EP 1 964 739 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10138909 B
- EP 0379329 A2
- WO 9716334 A1